Europäisches Patentamt

European Patent Office

Office européen des brevets

(11) Veröffentlichungsnummer : **0 164 042
B1**

## (12) EUROPÄISCHE PATENTSCHRIFT

(45) Veröffentlichungstag der Patentschrift :
17.08.88

(21) Anmeldenummer : 85106467.5

(22) Anmeldetag : 25.05.85

(51) Int. Cl.⁴ : **G 11 B   5/84**

(54) **Verfahren zur Herstellung von Magnetogrammträgern.**

(30) Priorität : 01.06.84 DE 3420466

(43) Veröffentlichungstag der Anmeldung :
11.12.85 Patentblatt 85/50

(45) Bekanntmachung des Hinweises auf die Patenterteilung : 17.08.88 Patentblatt 88/33

(84) Benannte Vertragsstaaten :
DE FR GB NL

(56) Entgegenhaltungen :
EP-A- 0 093 966
DE-A- 2 208 792
DE-B- 2 162 272
GB-A- 1 041 194
US-A- 2 977 631

(73) Patentinhaber : BASF Aktiengesellschaft
Carl-Bosch-Strasse 38
D-6700 Ludwigshafen (DE)

(72) Erfinder : Vaeth, Guenter
Woogstrasse 35
D-6703 Limburgerhof (DE)
Erfinder : Heinz, Robert, Ing. (grad.)
Heilbronner Strasse 12
D-6800 Mannheim 51 (DE)
Erfinder : Ohlinger, Manfred, Dr.
Anselm-Feuerbach-Strasse 13
D-6710 Frankenthal (DE)
Erfinder : Rudolf, Peter, Dr.
Nibelungenweg 14
D-6701 Maxdorf (DE)
Erfinder : Hofmann, Friedbert, Dr. Dipl.-Ing.
Rehbachstrasse 34a
D-6708 Neuhofen (DE)
Erfinder : Melzer, Milena, Dipl.-Ing.
Kirchenstrasse 116
D-6700 Ludwigshafen (DE)

**Beschreibung**

Die Erfindung betrifft ein Verfahren zur Herstellung von Magnetogrammträgern gemäß Oberbegriff des Patentanspruchs 1. Ein solches Verfahren ist bekannt aus EP-A-00 93 966.

Eine Reihe von Verfahren zur Herstellung von Magnetogrammträgern bezieht sich auf die Herstellung des magnetischen Materials für die Magnetdispersion. So ist beispielsweise bekannt, daß durch die Variation des Längen-Dickenverhältnisses der nadelförmigen, ferromagnetischen Teilchen die Ausrichtbarkeit und Packungsdichte sowie die magnetischen Eigenschaften beeinflußt werden können. Andere Verfahren beschreiben die Herstellung verschiedener Typen vom magnetischen Materialien, sogenannten Magnetpigmenten, wie beispielsweise $\gamma$-Eisen-III-oxid ohne und mit Cobaltdotierung, Chromdioxid oder Metallpigment. Unabhängig vom Typ des eingesetzten Magnetpigmentes läßt sich die Aussteuerbarkeit der tiefen Frequenzen dadurch verbessern, daß man auf die Trägerfolie möglichst dicke Schichten des Magnetmaterials aufträgt. Der Dicke der Schicht sind jedoch Grenzen gesetzt, denn einesteils besitzen die Magnetköpfe moderner Aufzeichnungsgeräte enge Kopfspalte und sind dadurch nicht in der Lage dicke Schichten vollständig zu magnetisieren. Andernteils sollen auf einer Spule oder in einer Cassette möglichst große Längen eines Bandes aufgewickelt werden können, da lange Spielzeiten erwünscht sind. Diese sollen jedoch nicht zu Lasten der Aufzeichnungs- und Wiedergabequalität erreicht werden. Daraus resultiert, daß die Packungsdichte der Magnetoxide in der Magnetogrammträgerschicht möglichst hoch sein soll.

Ein Weg zur Erzielung einer hohen Packungsdichte ist die Vorverdichtung der einzusetzenden Magnetpigmente vor der Dispergierung. In der US-PS 2 977 631 ist eine Apparatur zur Kompaktierung besonderer, pulverförmiger Materialien beschrieben, bei der eine Walze eines Walzenpaares verschiebbar ist und mit Vordruck an die feststehende Walze angepreßt werden kann. Das Produkt wird über eine Stopfschnecke dem Walzenspalt zugeführt. Schnecken- und Walzenmotor werden über eine Regelstrecke so gekoppelt, daß mit steigender Geschwindigkeit des Walzenpaares die Schnecke mitgeregelt wird und so die entsprechend notwendige, größere Produktmenge dem Spalt zugeführt wird. Diese Apparatur hat sich für die Verdichtung von nadelförmigen $\gamma$-Eisenoxiden als nicht geeignet erwiesen, da die magnetischen Eigenschaften des kompaktierten Produktes durch die Verdichtung verschlechtert sind.

Eine weitere Apparatur zur Kompaktierung beispielsweise pulverförmiger Pigmente ohne Bindemittel ist aus der GB-PS 1 041 194 bekannt. Diese Apparatur weist ebenfalls eine feststehende und eine verschiebbare, mit Vordruck anpreßbare Walze sowie eine Produktförderschnecke für den Walzenspalt auf. Die Förderschnecke ist dabei axial verschiebbar, so daß durch entsprechenden Abstandseffekt zum Walzenspalt zusätzlich zu dem im Walzenspalt herrschenden Druck definierte Verhältnisse zur gleichmäßigen Kompaktierung von Pulvern eingestellt werden können. Auch mit dieser Anordnung konnten magnetische $\gamma$-Eisenoxide mit gewünschtem Schüttgewicht nach entsprechender Einstellung der Apparatur verdichtet werden, jedoch verschlechterten sich dabei auch hier die magnetischen Pulvereigenschaften gegenüber dem unverdichteten Produkt.

Vorliegender Erfindung liegt daher die Aufgabe zugrunde, ein Verfahren zur Herstellung von Magnetogrammträgern zu entwickeln, bei dem das für die Magnetdispersion vorgesehene magnetische Material ohne die vorstehend geschilderten Nachteile zu einer hohen Packungsdichte vorverdichtet werden kann.

Gelöst wurde die Aufgabe durch ein Verfahren mit den Merkmalen des Patentanspruchs.

Nachfolgend ist das erfindungsgemäße Verfahren anhand eines Ausführungsbeispiels näher erläutert.

Das magnetische Material wird mit oder ohne Dispergierhilfsmittel in einer Walzenpresse vorverdichtet, die aus einem antreibbaren Walzenpaar, einer dem zwischen den beiden Walzen gebildeten Spalt zugeordneten Stopfschnecke und einem dem Walzenpaar nachgeordneten Mahlwerk, beispielsweise einer Hammermühle, besteht. Eine der beiden Walzen weist eine geriffelte Oberfläche auf und ist in Richtung des Walzenabstandes verschiebbar gelagert, so daß der Walzenspalt einstellbar ist. Die andere Walze ist an ihrer Oberfläche mit Formhöhlungen versehen.

Die Stopfschnecke ist zur Einstellung eines definierten Materialdruckes vor dem Walzenspalt in ihrer Drehzahl regelbar. Durch axiale Verschiebbarkeit der Stopfschnecke kann der Materialdruck ebenfalls beeinflußt werden.

Im Mahlwerk werden die einzelnen Magnetpigmentpreßlinge zu Pulver mikronisiert, ohne daß die Packungsdichte des magnetischen Materials wesentlich verändert wird. Vorteilhaft ist dabei die Mischung des Magnetpigmentes mit dem für die anschließende Dispergierung benötigten Dispergierhilfsmittel in einem der Walzenpresse vorgeschalteten diskontinuierlichen oder kontinuierlichen Mischer. Zusätzlich kann dabei noch eine Teilmenge oder die ganze Menge des für die Dispergierung benötigten Bindemittels zugegeben werden.

Nach der erfindungsgemäßen Behandlung des magnetischen Materials wird mit Bindemittellösung- oder -emulsion und weiteren Zusatzstoffen die Magnetdispersion hergestellt und diese auf einen flexiblen Träger, gewöhnlich eine Folienbahn, in üblicher Weise aufgebracht. Im Bereich der noch ungetrockneten Schicht kann gegebenenfalls mittels eines Richtmagneten die Ausrichtung der Magnetteilchen in eine Vorzugsrichtung erfolgen. Nach dem Trocknen der Magnetschicht wird der beschichtete Träger den weiteren Verarbeitungsstufen zur Herstellung eines Magnetogrammträgers zugeführt.

Durch die neuartige Vorverdichtung kann ein Teil der sonst üblichen Dispergierenergie in diskontinuierlichen Kugelmühlen, kontinuierlichen Rührwerksmühlen oder sonstigen Dispergieraggregaten eingespart werden, ohne daß dadurch Nachteile in der Qualität des daraus hergestellten Magnetogrammträgers entstehen. Ein Maß für die schonende Vorverdichtung nach dem oben beschriebenen Verfahren ist die weitgehend gleiche Schaltfeldstärke des Magnetpigmentes vor und nach dem Mahlvorgang. Ferner ist die Koerzitivkraft des verdichteten Magnetpigments gegenüber unverdichtetem nur unwesentlich erniedrigt. Die spezifische Remanenz des magnetischen Materials, bezogen auf gleiches Stampfgewicht, wird durch die Verdichtung nicht reduziert.

Der technische Fortschritt durch das erfindungsgemäße Verfahren wird anhand nachfolgender Beispiele und Vergleichsversuche gegenüber dem Stand der Technik gezeigt. Die magnetischen Werte des magnetischen Materials werden durch Messung einer auf eine Packungsdichte von $\rho = 1,2$ g/cm$^3$ gebrachten Pigmentprobe mit einem Schwingmagnetometer bei 160 kA/m bestimmt. Die Koerzitivkraft ($H_c$) wird in kA/m, die spezifische Remanenz ($Mr/\rho$) und die spezifische Magnetisierung ($Mm/\rho$) werden in nTm$^3$/g angegeben.

Die Schaltfeldverteilung ist ein Maß für die Gleichmäßigkeit der magnetischen Teilchen. Sie wird aus der Remanenzkurve als H/HR bestimmt, wobei H die Felddifferenz, bei der 75 % bzw. 25 % der Teilchen umschalten, und HR die Remanenzkoerzitivfeldstärke ist.

Die spezifische Oberfläche wird nach der Stickstoffadsorptionsmethode bestimmt und in m$^2$/g angegeben.

## Beispiel 1

1 kg nadelförmiges $\gamma$-Eisenoxid mit einer spezifischen Oberfläche von 19,5 m$^2$/g, einer Koerzitivkraft von 29,0 kA/m, einer spezifischen Remanenz von 39 nTm$^3$/g und einer spezifischen Magnetisierung von 82 nTm$^3$/g bei einer Packungsdichte von 0,4 g/cm$^3$ wird nach dem erfindungsgemäßen Verfahren auf eine Packungsdichte von 0,70 g/cm$^3$ gebracht. Die Eigenschaften des verdichteten Pigmentes sind in Tabelle 1 angegeben.

## Beispiel 2

In einen der Walzenpresse vorgeschalteten Mischer werden 1 000 g des Eisenoxids entsprechend Beispiel 1 eingetragen und 20 g eines Salzes aus Polyaminamiden und eines hochmolekularen Esters zugeführt. Nach 10 minütigem Homogenisieren wird die Mischung mit Hilfe der Walzenpresse auf eine Packungsdichte von 0,70 g/cm$^3$ verdichtet. Die Eigenschafswerte sind ebenfalls in Tabelle 1 angegeben.

## Beispiel 3

1 kg nadelförmiges $\gamma$-Eisenoxid mit einer spezifischen Oberfläche von 21,4 m$^2$/g, einer Koerzitivkraft von 28,6 kA/m, einer spezifischen Remanenz von 43 nTm$^3$/g und einer spezifischen Magnetisierung von 79 nTm$^3$/g bei einer Packungsdichte von 0,38 g/cm$^3$ wird nach dem erfindungsgemäßen Verfahren auf eine Packungsdichte von 0,70 g/cm$^3$ gebracht. Die Eigenschaften des verdichteten Pigmentes sind in Tabelle 1 aufgeführt.

## Beispiel 4

1 kg nadelförmiges $\gamma$-Eisenoxid mit einer Cobaltferrithülle und einer spezifischen Oberfläche von 19,3 m$^2$/g bei einer Koerzitivkraft von 32,0 kA/m, einer spezifischen Remanenz von 43 nTm$^3$/g und einer spezifischen Magnetisierung von 84 nTm$^3$/g bei einer Packungsdichte von 0,55 g/cm$^3$ wird nach dem erfindungsgemäßen Verfahren auf eine Packungsdichte von 0,70 g/cm$^3$ gebracht. Die Eigenschaften des verdichteten Pigmentes sind in Tabelle 1 aufgeführt.

## Vergleichsversuch 1

1 kg unverdichtetes, nadelförmiges $\gamma$-Eisenoxid wie in Beispiel 1 wird mit einem Walzwerk, bestehend aus einer festgelagerten und einer parallel verschiebbaren Glattwalze, bei einem Abstand der beiden Walzen von 1,5 mm und einer gleichmäßigen Geschwindigkeit beider Walzen gegeneinander auf eine Packungsdichte von 0,70 g/cm$^3$ gebracht. Die Eigenschaften des verdichteten Pigmentes sind in Tabelle 1 aufgeführt.

## Vergleichsversuch 2

1 kg unverdichtetes, nadelförmiges $\gamma$-Eisenoxid wie in Beispiel 1 wird in einer Strahlmühle von 170 mm Durchmesser mit einem Durchsatz von 8 kg pro Stunde bei einem Strahldruck von 3,5 bar mit Stickstoff als Trägergas gemahlen. Die danach gemessene Packungsdichte beträgt 0,20 g/cm$^3$. Die Eigenschaften

0 164 042

des Pigmentes sind in Tabelle 1 aufgeführt.

Vergleichsversuch 3

1 kg strahlgemahlenes, nadelförmiges γ-Eisenoxid wie in Vergleichsversuch 2 wird durch sogenannte Aufbaugranulierung, d. h. Bildung von Agglomeraten in einer mit diesem Pigment gefüllten 10 l-Walze mit einer Umdrehungsgeschwindigkeit von 20 Upm, auf eine Packungsdichte von 0,70 g/cm³ gebracht. Die Eigenschaften des Pigmentes sind in Tabelle 1 aufgeführt.

Vergleichsversuch 4

1 000 g unverdichtetes, nadelförmiges γ-Eisenoxid, wie in Beispiel 2 mit 20 g eines Salzes aus Polyaminamiden und eines hochmolekularen Esters, werden mit 1 011,1 g einer Lösung der Lösemittelkomponenten Tetrahydrofuran und Dioxan, enthaltend 11,1 g darin gelöste Bindemittelanteile eines gebräuchlichen Polyesterurethanes und eines PVC-Mischpolymerisates im Verhältnis 7 : 3, zäh geknetet. Die Knetdauer beträgt 1 Stunde. Die Knetmasse wird anschließend mit derselben Bindemittellösung und -menge verdünnt und in einer 6 l-Kugelmühle mit 10 kg Eisenkugeln vom Durchmesser 4 bis 6 mm 24 Stunden bei einer Umdrehungszahl von 42 Umdrehungen/min nachdispergiert. Die so erhaltene Dispersion wird unter Druck durch einen Filter mit 5 μm Poren filtriert und zu einem Magnetband von 3,81 mm Breite verarbeitet. Die Meßwerte sind in Tabelle 2 unter der Rubrik « Vergleichsversuche 4 A » ersichtlich.

Vergleichsversuch 5

1 020 g einer Mischung aus 1 000 g Magnetpigment wie in Beispiel 3 und 20 g Dispergiermittel wie in Beispiel 2 werden wie in Vergleichsversuch 2 strahlgemahlen und anschließend wie in Vergleichsversuch 3 aufbaugranuliert. Die Eigenschaften des Pigmentes sind in Tabelle 1 aufgeführt.

Vergleichsversuch 6

1 kg unverdichtetes, nadelförmiges γ-Eisenoxid wie in Beispiel 3 wird mit einem Walzwerk, bestehend aus einer festgelagerten und einer parallel verschiebbaren Glattwalze, bei einem Abstand der beiden Walzen von 1,5 mm und einer gleichmäßigen Geschwindigkeit beider Walzen gegeneinander verdichtet. Zur Erzielung einer Packungsdichte von 0,70 g/cm³ sind dabei 7 Passagen erforderlich. Die Eigenschaften des Magnetpigmentes sind in Tabelle 1 aufgeführt.

Vergleichsversuch 7

1 kg unverdichtetes, nadelförmiges γ-Eisenoxid wie in Beispiel 4 wird mit einem Walzwerk, wie in Vergleichsversuch 1 beschrieben, auf eine Packungsdichte von 0,70 g/cm³ verdichtet. Die Eigenschaften des Pigmentes sind in Tabelle 1 ersichtlich.

Vergleichsversuch 8

1 kg unverdichtetes, nadelförmiges γ-Eisenoxid wie in Beispiel 4 wird wie in Vergleichsversuch 2 strahlgemahlen und anschließend wie in Vergleichsversuch 3 aufbaugranuliert. Die Eigenschaften des Pigmentes sind in Tabelle 1 aufgeführt.

Eine Verarbeitung des Pigmentes der Beispiele 1 bis 4 sowie der Vergleichsversuche 1, 2, 3, 5, 7 und 8 zu Magnetbändern wird in den in Tabelle 2 aufgeführten Beispielen 1A bis 4A und Vergleichsversuchen 1A, 2A, 3A, 5A, 7A und 8A gezeigt.

In je eine 6 l-Kugelmühle mit 10 kg Stahlkugeln vom Durchmesser 4 bis 6 mm werden je 1 000 g γ-Eisenoxid (Beispiele 1, 3 und 4, Vergleichsversuche 1, 2, 3, 6, 7 und 8) und je 20 g eines Salzes aus Polyaminamiden und eines hochmolekularen Esters bzw. bei Beispiel 2 und Vergleichsversuch 5 je 1 020 g der γ-Eisenoxid-Dispergierhilfsmittel-Mischung eingefüllt. Dann werden je Mühle 1 011,1 g einer Lösung der Lösemittelkomponenten Tetrahydrofuran : 1,4-Dioxan = 1 : 1, enthaltend 11,1 g darin gelöste Bindemittelanteile eines gebräuchlichen Polyestermethanes und eines PVC-Mischpolymerisates im Verhältnis 7 : 3 und 250 g Tetrahydrofuran : 1,4-Dioxan = 1 : 1 zusätzlich zugegeben. Die 6 l-Mühlen werden bei 42 min⁻¹ 24 Stunden gerollt. Anschließend wird in jede Mühle nochmals dieselbe Bindemittellösung und -menge eingefüllt und 24 Stunden nachdispergiert.

Die so erhaltenen Dispersionen werden unter Druck durch einen Filter mit 5 μm Porenweite filtriert und mit einer Auftragsvorrichtung auf eine 12 μm dicke Polyethylenterephthalatfolie so aufgetragen, daß nach Passieren der noch nassen Schicht durch ein Magnetfeld für die Längsausrichtung der Magnetteilchen, anschließender Trocknung bei 60 bis 100 °C und Glätten zwischen zwei auf 70 °C beheizten Walzen bei einem Liniendruck von 5 kg/cm eine Schichtdicke von 4,5 μm verbleibt. Die beschichteten Folien werden in Bänder von 3,81 mm Breite geschnitten. Die elektroakustische Messung erfolgt nach

4

DIN 45 512, Blatt 2, im IEC 1-Arbeitspunkt. Der Rauschwert RGA der Bänder wird gegen das IEC 1-Bezugsband R 723 DG gemessen, desgleichen die Kopierdämpfung. Letztere ist ein Maß für schonende Verdichtung, da sich durch eine größere Anzahl an Magnetteilchen, z. B. durch Brechen von Primärteilchen beim Verdichtungsvorgang, pro Schichtvolumen der Kopiereffekt erhöht, d. h. die Kopierdämpfung erniedrigt. Die Ergebnisse sind in Tabelle 2 angegeben.

(Siehe Tabellen Seite 6 ff.)

Tabelle 1

| Eigenschaften des Pigmentes | Beispiel 1 | Beispiel 2 | Vergleichsversuch 1 | Vergleichsversuch 2 | Vergleichsversuch 3 | Vergleichsversuch 4 | Beispiel 3 | Vergleichsversuch 5 | Vergleichsversuch 6 | Beispiel 4 | Vergleichsversuch 7 | Vergleichsversuch 8 |
|---|---|---|---|---|---|---|---|---|---|---|---|---|
| Koerzitivkraft (kA/m) | 28,5 | 28,7 | 28,0 | 28,4 | 28,2 | siehe | 28,0 | 27,7 | 26,4 | 31,6 | 30,8 | 31,1 |
| spez. Remanenz (nTm$^3$/g) | 40 | 39 | 38 | 39 | 39 | Tabelle 2 | 43 | 42 | 38 | 44 | 43 | 43 |
| spez. Magnetisierung (nTm$^3$/g) | 83 | 81 | 80 | 81 | 82 | Vergleichs- | 80 | 79 | 75 | 85 | 82 | 82 |
| Schaltfeld- verteilung | 0,49 | 0,50 | 0,56 | 0,53 | 0,53 | versuch | 0,52 | 0,56 | 0,60 | 0,53 | 0,59 | 0,56 |
| spez. Oberfläche (m$^2$/g) | 19,5 | 19,5 | 19,8 | 19,7 | 19,6 | 4 A | 21,5 | 21,8 | 22,5 | 19,5 | 19,8 | 19,9 |
| Packungsdichte (g/cm$^3$) | 0,70 | 0,70 | 0,70 | 0,20 | 0,70 | | 0,70 | 0,70 | 0,70 | 0,70 | 0,70 | 0,70 |

0 164 042

0 164 042

Tabelle 2

| Magnetische und elektroakustische Eigenschaften des Magnetbandes | Beispiel 1A | Beispiel 2A | Vergleichsversuch 1A | Vergleichsversuch 2A | Vergleichsversuch 3A | Vergleichsversuch 4A | Beispiel 3A | Vergleichsversuch 5A | Vergleichsversuch 6A | Beispiel 4A | Vergleichsversuch 7A | Vergleichsversuch 8A |
|---|---|---|---|---|---|---|---|---|---|---|---|---|
| Koerzitivkraft (kA/m) | 27,6 | 27,4 | 27,0 | 27,2 | 27,0 | 26,2 | 27,4 | 27,5 | 25,8 | 29,7 | 28,8 | 28,5 |
| Remanenz längs MR (mT) | 175 | 180 | 160 | 165 | 170 | 180 | 160 | 155 | 165 | 185 | 180 | 175 |
| relative Remanenz $\frac{Mr}{Mm}$ | 0,88 | 0,88 | 0,86 | 0,87 | 0,87 | 0,87 | 0,87 | 0,87 | 0,85 | 0,89 | 0,87 | 0,88 |
| Richtfaktor (Remanenz $\frac{längs}{quer}$) | 3,2 | 3,25 | 2,8 | 3,0 | 2,95 | 3,2 | 2,95 | 3,0 | 2,6 | 3,4 | 3,0 | 3,2 |
| Tiefenaussteuerbarkeit AT (dB) bei 333 Hz | +1,0 | +1,5 | +0,5 | +0,5 | +0,8 | +1,8 | +0,5 | 0 | +0,7 | +2 | +2 | +1,5 |
| Höhenaussteuerbarkeit AH (dB) bei 10 KHz | +2 | +1,8 | 0 | +0,8 | +1 | 0 | +1 | +1 | -1 | +2,5 | +1 | +1,8 |
| RCA-Wert (dB) | -0,5 | -0,7 | -0,5 | 0 | -0,5 | -0,8 | +0,5 | +0,5 | 0 | -1,2 | -1 | -1,2 |
| Kopierdämpfung (dB) | +3 | +3 | 0 | +1 | 0 | -1,5 | +3 | +1,5 | -1,5 | 0 | -3 | -1,5 |

**0 164 042**

**Patentanspruch**

Verfahren zur Herstellung von Magnetogrammträgern durch Aufbringen einer Magnetdispersion auf einen flexiblen Träger und anschließendes Trocknen der Magnetschicht, bei dem die Magnetdispersion duch Anreiben von magnetischem Material in einer Bindemittellösung oder -emulsion und weiteren Zusatzstoffen hergestellt wird, und das magnetische Material mit oder ohne Dispergierhilfsmittel in einer Walzenpresse vorverdichtet wird, die aus einem antreibbaren Walzenpaar und aus einem dem Walzenpaar nachgeordneten Mahlwerk besteht, dadurch gekennzeichnet, daß die Walzenpresse eine dem Spalt zwischen den Walzen zugeordnete Stopfschnecke, die zur Einstellung eines definierten Materialdruckes vor dem Spalt regelbar ist umfaßt und daß eine Walze des Walzenpaares an der Oberfläche Formhöhlungen und die andere Walze des Walzenpaares Riffelungen aufweist.

**Claim**

A process for the production of a magnetic recording medium by applying a magnetic dispersion to a flexible base and then drying the magnetic layer, in which the magnetic dispersion is prepared by milling magnetic material in a binder solution or emulsion and further additives, and the magnetic material, with or without a dispersant, is precompacted in a roll press which consists of a drivable pair of rolls and of a milling unit downstream from the pair of rolls, wherein the roll press comprises a stuffing screw which is assigned to the nip between the rolls and can be adjusted to obtain a defined material pressure upstream of the nip, and one roll of the pair of rolls has shaped cavities at the surface and the other roll of the pair of rolls has flutes.

**Revendication**

Procédé de fabrication de supports d'enregistrement magnétique par application d'une dispersion magnétique sur un support flexible suivie d'un séchage de la couche magnétique, selon lequel la dispersion magnétique est obtenue par broyage de matière magnétique dans une solution ou émulsion de liant et autres additifs, et la matière magnétique est précomprimée, avec ou sans auxiliaire dispersant, dans une presse à cylindres qui est constituée d'une paire de cylindres entraînables et d'un broyeur disposé à la suite de la paire de cylindres, caractérisé par le fait que la presse à cylindres englobe une vis sans fin de bourrage associée à l'interstice entre les cylindres et qui est réglable pour obtenir devant l'interstice une pression de matière définie et que l'un des cylindres de la paire de cylindres présente à sa surface des creux en forme et l'autre cylindre de la paire de cylindres des cannelures.